# EUROPÄISCHE PATENTSCHRIFT

(11) **EP 1 029 816 B1**
(45) Veröffentlichungstag und Bekanntmachung des Hinweises auf die Patenterteilung: **05.06.2002**
(21) Anmeldenummer: 00102301.9
(22) Anmeldetag: 03.02.2000
(51) Int. Cl.: B65G 47/244

(54) **Verfahren und Vorrichtung zum Drehen eines Gegenstandes, insbesondere zum Drehen einer quaderförmingen Faltschachtel**
Method and device for turning an article especially for turning a parallelepipedic folding box
Procédé et dispositif pour tourner un article en particulier pour tourner une boîte pliable parallélépipédique

(30) Priorität: 19.02.1999 DE 19906882
(43) Veröffentlichungstag der Anmeldung: 23.08.2000
(73) Patentinhaber: Seidel, Helmut, 65396 Walluf (DE)
(72) Erfinder: Franta, Georg, 87634 Obergünzburg (DE)
(74) Vertreter: Quermann, Helmut, Dipl.-Ing.

(56) Entgegenhaltungen:
- DE-A- 19 636 981
- US-A- 3 306 424

## Beschreibung

Die Erfindung betrifft ein Verfahren und eine Vorrichtung zum Drehen eines Gegenstandes, insbesondere zum Drehen einer quaderförmigen Faltschachtel.

Bei Verpackungsmaschinen ist es bekannt, den Kartonzuschnitt zunächst so aufzurichten, dass der Bodenabschnitt sowie die lotrecht zu diesem angeordneten Längsseiten- und Stirnseitenabschnitte der Faltschachtel gebildet werden. Die Längsseitenabschnitte und die Querseitenabschnitte werden miteinander verbunden, indem beispielsweise Stirnseitenabschnitte miteinander verhakt oder verklebt werden. Diese Vorgänge erfolgen in aller Regel bei einer Transportrichtung des Kartonzuschnitts, bei der die Längsseitenabschnitte, in deren Längserstreckung gesehen, in Förderrichtung befördert werden. Es wird dann der Deckelabschnitt abgebogen und verschließt somit die Öffnung der beladenen Faltschachtel. Anschließend ist es nur noch erforderlich, Wandabschnitte, die am Deckelabschnitt angelenkt sind, aus der Horizontalorientierung in die Vertikale abzuklappen und mit den stirnseitigen Wandabschnitten zu verbinden, beispielsweise zu verhaken oder zu verkleben. Damit diese abschließenden Vorgänge beim Bilden der Faltschachtel, bezogen auf die Förderrichtung der Faltschachtel, von der Seite her erfolgen können, ist es erforderlich, die Faltschachtel zuvor um eine vertikale Achse zu drehen, insbesondere um 90°.

Aus der EP 0 074 129 ist ein Verfahren zum Drehen eines Gegenstandes, der eine Unterseite sowie Seitenflächen besitzt, insbesondere zum Drehen einer quaderförmigen Faltschachtel bekannt, wobei der Gegenstand längs einer ersten Bahn gefördert wird, gedreht wird, um eine Neuausrichtung des Gegenstands zu erreichen und längs einer zweiten Bahn gefördert wird, die in Richtung der ersten Bahn verläuft, wobei die Drehung des Gegenstandes unter Einwirkung eines eine Seitenfläche des Gegenstands kontaktierenden Elements erfolgt. Dort ist das kontaktierende Element, nachfolgend Kontaktelement genannt, horizontal orientiert und um eine vertikale Achse schwenkbar gelagert, in dem Sinne, dass das Kontaktelement ständig umläuft und dessen Umlaufgeschwindigkeit auf die Fördergeschwindigkeit der einzelnen von der Verpackungsmaschine kontinuierlich geförderten, teilweise geformten Faltschachteln abgestimmt ist. Bei dieser beschriebenen Vorrichtung zum Drehen des Gegenstandes ist die erste Bahn seitlich zur zweiten Bahn versetzt und zwar in Richtung zur Vorrichtung zum Drehen des Gegenstandes. Der zu drehende Gegenstand, der, bezogen auf die Förderrichtung der ersten Bahn, längs orientiert ist, gelangt in den Bereich des Kontaktelementes, das gegen den vorlaufenden Bereich des Seitenwandabschnittes der Faltschachtel bewegt wird und hierdurch die Faltschachtel relativ zur Förderrichtung der ersten Bahn auslenkt. Oberhalb dieser Bahn ist eine Reibungsplatte mit Bürsten angeordnet, die den Deckelbereich der Faltschachtel bei derem Durchlauf durch die Verpackungsmaschine kontaktieren und abbremsen, wobei die Einwirkung der Bürsten im Sinne eines Drehmomentes zu sehen ist, das den hauptsächlichen Beitrag zur Drehung der Faltschachtel erbringt. Das weiter schwenkende Kontaktelement, das nach wie vor an der Längsseitenwand der Faltschachtel anliegt, bewirkt, bis es eine Position senkrecht zur Förderrichtung der ersten Bahn erreicht hat, eine weitere Auslenkung und damit Drehung der Faltschachtel. Die vollständige Drehung der Faltschachtel erfolgt mittels Mitnehmern der zweiten Bahn. Ein erster Mitnehmer der zweiten Bahn, der auf der dem Kontaktelement zugewandten Seite der Bahn angeordnet ist, ist nachlaufend und gelangt in Anlage mit dem nachlaufenden Längsseitenwandabschnitt der Faltschachtel und fördert diesen. Der Mitnehmer auf der anderen Seite der zweiten Bahn gelangt erst später in Anlage mit dem nachlaufenden Längsseitenwandabschnitt, so dass die nunmehr um 90° gedrehte Faltschachtel von dem Mitnehmerpaar weitergeführt wird, um auch im Bereich der Stirnseitenwandabschnitte verschlossen zu werden.-Nachteilig ist bei diesem Verfahren bzw. der Vorrichtung zur Drehung des Gegenstandes, dass das Kontaktelement nur eine Hilfsdrehbewegung zum anfänglichen Auslenken der Faltschachtel aus deren Förderrichtung bewirkt und einen Längsseitenwandabschnitt der Verpackung kontaktiert. Die Hauptdrehbewegung der Faltschachtel hingegen wird durch die Bürsten eingeleitet. Im übrigen ist es zwingend erforderlich, dass die vollständige Drehung der Faltschachtel um die gewünschten 90° mittels des nachlaufenden Mitnehmers der zweiten Bahn bewerkstelligt wird. Dies alles hat zur Konsequenz, dass eine recht lange Förderstrecke der Faltschachtel notwendig ist, um diese zu drehen. Dies wiederum bedingt eine große Baulänge der Verpackungsmaschine und hiermit einhergehende erhöhte Kosten, sowohl unter dem Aspekt des von der Verpackungsmaschine benötigten Platzes als auch unter dem Aspekt der Baukosten der Verpackungsmaschine betrachtet. Nachteilig ist ferner, dass nur ein Fördern mit relativ geringen Fördergeschwindigkeiten möglich ist, da die vorbeschriebenen diversen Bauelemente zum Drehen des Gegenstandes hinsichtlich ihrer Bewegung abzustimmen sind. Abgesehen hiervon liegt das Kontaktelement reibend an der Faltschachtel an, womit nicht ausgeschlossen werden kann, dass die mittels des Kontaktelementes aus der Förderrichtung auszulenkende Faltschachtel im zugeordneten Längswandabschnitt beschädigt oder zumindest die Qualität deren Oberfläche beeinträchtigt wird.

Ein Verfahren zum Drehen eines Gegenstandes sowie eine Vorrichtung zur Durchführung des Verfahrens gemäß den Oberbegriffen der Patentansprüche 1 und 9 ist aus der US 3306424 A bekannt. Dort bilden die erste und die zweite Bahn zum Fördern des Gegenstandes Bestandteil einer umlaufenden Fördereinrichtung. Diese weist eine Vielzahl paralleler, umlaufender Riemen auf, mit denen in Förderrichtung beabstandet Mitnehmer befestigt sind, die als Winkelelemente ausgebildet sind. Neben dieser Fördereinrichtung ist eine umlaufende Fördereinrichtung angeordnet, die zwei Kontaktelemente aufnimmt, wobei das jeweilige Kontaktelement schneller bewegt wird, als der jeweilige Mitnehmer. Das Kontaktelement kontaktiert die hintere Seitenfläche des Gegenstandes im Bereich der benachbarten seitlichen Seitenfläche des Gegenstandes und bewirkt eine Drehung des Gegenstandes um etwa 45° bei Erreichen des Umlenkpunktes des Kontaktelementes. Von dort wird dieses Kontaktelement wieder an seinen Ausgangspunkt zurückgefördert. Die vollständige Drehung des Gegenstandes um 90° erfolgt dann mittels des dem Gegenstand nachlaufenden Mitnehmers. Geführt wird der Gegenstand bei seiner Drehung nur in einem der Fördereinrichtung für die beiden Kontaktelemente abgewandten, eingebuchteten Bereich der Fördereinrichtung für die Gegenstände. Diejenige Seitenfläche des Gegenstandes, auf die das Kontaktelement einwirkt, wird erst im Bereich der zweiten Bahn seitlich geführt, nachdem es dort zwischen seitliche Schienen eingeführt ist.

In der DE 196 36 981 A1 ist eine Vorrichtung zum Drehen eines quaderförmigen Gegenstandes von Querausrichtung in Längsausrichtung beschrieben. Der Gegenstand wird mittels eines Förderbandes gefördert. Im Bewegungsweg des quer ausgerichteten Gegenstandes befindet sich auf der einen Seite des Förderbandes eine Haltekette mit Anschlägen sowie auf der anderen Seite des Förderbandes eine Drehkette mit Anschlägen. Die Haltekette wird etwa mit derselben Geschwindigkeit bewegt wie das Förderband, die Drehkette mit einer größeren Geschwindigkeit als das Förderband. Dies bedingt, dass aufgrund Einwirkung der Anschläge auf den Gegenstand dessen Drehung herbeigeführt wird.

Verfahren und Vorrichtungen zum Drehen eines Gegenstandes, insbesondere zum Drehen einer Verpackung bzw. einer quaderförmigen Faltschachtel, sind des weiteren aus der EP 0 367 940 B1, EP 0 472 984 A1, US 4 085 839 und US 5 660 262 bekannt.

Es ist Aufgabe der vorliegenden Erfindung, ein Verfahren und eine Vorrichtung zum Drehen eines Gegenstandes anzugeben, mit dem bzw. mit der ein Drehen des Gegenstandes auf engstem Raum selbst bei großer Fördergeschwindigkeit möglich ist.

Das erfindungsgemäße Verfahren ist im Patentanspruch 1 beschrieben.Vorteilhafte Weiterbildungen des Verfahrens ergeben sich aus den Patentansprüchen 2-8.

Bei dem erfindungsgemäßen Verfahren wird das Kontaktelement in Richtung der Bahnen bewegt. Es kann somit während des Förderns des Gegenstandes, insbesondere der Faltschachtel, durch die Verpackungsmaschine der Bewegung des Gegenstandes in Förderrichtung folgen und wirkt dauerhaft auf diesen ein. Diese Einwirkung erfolgt rollend, womit beim Drehen des Gegenstandes eine Relativbewegung zwischen diesem und dem Kontaktelement ohne weiteres möglich ist. Aufgrund des Umstandes, daß die rollende Kontaktierung keine Reibkräfte zwischen Kontaktelement und Gegenstand erzeugt, ist sichergestellt, daß die Seitenfläche des Gegenstands, an der das Kontaktelement anliegt, nicht beschädigt bzw. unter ästhetischen Gesichtspunkten in ihrem Aussehen nicht beeinträchtigt wird. Die rollende Kontaktierung des Gegenstandes ist eine wesentliche Voraussetzung dafür, daß die Verpackungsmaschine mit hohen Fördergeschwindigkeiten betrieben werden kann.

Des weiteren wird das Kontaktelement gegen die, auf die Förderrichtung des Gegenstands bezogen, hintere Seitenfläche des Gegenstands bewegt. Der mittels der ersten Bahn in den Bereich der Drehvorrichtung geförderte Gegenstand wird in diesem Bereich vom Kontaktelement hintergriffen, über das beim Bewegen des Kontaktelementes in Richtung der Bahnen aufgrund des Angriffspunktes des Kontaktelementes am Gegenstand ein Drehmoment in diesen eingeleitet wird, das zur Folge hat, daß eine schiebende Kraft in den Gegenstand eingeleitet wird. Diese bewirkt das unmittelbare Drehen des Gegenstandes auf kürzestem Raum. Die Drehung des Gegenstandes kann somit einzig und allein mittels des Kontaktelementes bewerkstelligt werden. Bevorzugt wird das Kontaktelement zum Drehen des Gegenstandes benachbart einer in Richtung der Bahnen verlaufenden Seitenfläche des Gegenstandes gegen dessen hintere Seitenfläche bewegt, womit sich ein außermittiger Angriffspunkt des Kontaktelementes am Gegenstand ergibt. Es können Hilfsmittel vorgesehen sein, die das Drehen des Gegenstandes unterstützen. So kann beispielsweise beim Drehen des Gegenstandes der dem Kontaktbereich von Kontaktelement und Gegenstand gegenüberliegende Bereich des Gegenstandes langsamer mit einer Bewegungskomponente in Richtung der Bahnen gefördert werden als der Kontaktbereich, indem die dem Kontaktbereich gegenüberliegende Seite und/oder die Unterseite und/oder die Oberseite des Gegenstandes durch Reibung beaufschlagt wird.

Insbesondere dann, wenn eine quaderförmige Faltschachtel zu drehen ist, wird es der Regelfall sein, wenn das Drehen des Gegenstandes eine Neuausrichtung des Gegenstandes um etwa 90° gedreht ergibt.

Das Stützelement wird in Richtung der Bahnen bewegt, wobei das Stützelement, auf die Bewegungsrichtung des Kontaktelementes bezogen, hinter diesem angeordnet ist und die hintere Seitenfläche des Gegenstandes bei dessen Neuausrichtung rollend kontaktiert. So stellt es ein besonderes Problem dar, den neu ausgerichteten Gegenstand stabil zu führen. Dies erfolgt bei bekannten Verpackungsmaschinen in aller Regel mittels seitlicher Führungsschienen. Diese schließen sich allerdings an den Drehbereich der Maschine an und bedingen eine sehr große Baulänge. Hinzu kommt, dass das vollständige Drehen des Gegenstandes in aller Regel durch die eingangs zum Stand der Technik beschriebenen Mitnehmer der zweiten Bahn bewerkstelligt werden, was gleichfalls den Nachteil beinhaltet, dass sich die Baulänge der Maschine vergrößert. Aufgrund des Stützelementes ist es nicht erforderlich, den gedrehten Gegenstand auf der Seite der Drehvorrichtung mittels Führungsschienen zu führen. Es wird vielmehr über das Kontaktelement das Drehen des Gegenstandes bewirkt. Sobald der Gegenstand in die neu ausgerichtete Position gedreht ist, kontaktiert das Stützelement zusätzlich, und zwar rollend, die hintere Seitenfläche des Gegenstandes, die, nach der Drehung nunmehr, auf die Förderrichtung des Gegenstands bezogen, seitlich angeordnet ist. Durch den Abstand von Kontaktelement und Stützelement ist eine Seitenführung des Gegenstandes gewährleistet, die mit dem Gegenstand bewegt wird. Zu diesem Zeitpunkt wird der Gegenstand bereits mittels der zweiten Bahn weiter bewegt, so dass er von der Seitenführung mittels des Kontaktelementes und des Stützelementes auf einfache Art und Weise in den Bereich einer fluchtenden Seitenführung der zweiten Bahn gefördert werden kann, die in Art einer Führungsschiene ausgebildet ist.

Gemäß einem besonderen Merkmal des erfindungsgemäßen Verfahrens ist vorgesehen, dass das Kontaktelement und/oder das Stützelement umlaufend gefördert werden. Es ist insbesondere daran gedacht, dass mehrere Paare von Kontaktelement und Stützelement mit einer Förderkette verbunden sind.

Zumindest beim Abschluss der Drehbewegung des Gegenstandes ist sicherzustellen, dass dieser auf der der Drehvorrichtung gegenüberliegenden Seite der Verpackungsmaschine geführt ist. Dies kann durch eine im wesentlichen in Förderrichtung orientierte Führungsschiene erfolgen. Optimieren lässt sich die Führung des Gegenstandes in diesem Bereich, wobei hierdurch sogar die Drehung des Gegenstandes unterstützt wird, dadurch, dass beim Drehen des Gegenstandes die dem Kontaktbereich des Kontaktelementes diametrale vertikale Kante des Gegenstandes zwischen zwei um vertikale Achsen drehbare Rollen eingeführt wird, wobei die Rollen die beiden Seitenflächen, die an diese vertikale Kante angrenzen, kontaktieren. Es wird somit beim Fördern des Gegenstandes auf der der Dreheinrichtung gegenüberliegenden Seite ein quasi fixer Punkt geschaffen, um den der Gegenstand gedreht wird, wobei das Kontaktelement den diesem zugewandten Bereich des Gegenstandes in Förderrichtung bewegt und infolgedessen den Gegenstand um den fixen Punkt schwenkt. Die frei drehbare Lagerung der Rollen ermöglicht es, auf die beiden Seitenflächen des Gegenstandes im Bereich der vertikalen Kante einzuwirken, ohne diese zu beschädigen. Ausgleichsbewegungen des Gegenstandes beim Drehen können die Rollen durch das ungehinderte, geringfügige Ablaufen auf den Seitenflächen des Gegenstandes nachvollziehen. Der Gegenstand wird somit seitlich ausschließlich mittels der diversen Rollen gehalten. Von der in Förderrichtung vorlaufend angeordneten Rolle wird der Gegenstand mittels der zweiten Bahn in den Bereich einer weiteren Führungsschiene gefördert, womit der gedrehte Gegenstand beim weiteren Fördern durch die Verpackungsmaschine im Bereich der beiden Stirnseiten geführt ist. Der weitere Transport des Gegenstandes erfolgt beispielsweise in bekannter Art durch Mitnehmer, die den Gegenstand im Bereich der nachlaufenden Längsseitenwand hintergreifen.

Insbesondere dann, wenn Gegenstände mit relativ geringer Geschwindigkeit durch die Verpackungsmaschine gefördert werden, wird in aller Regel die Drehung des Gegenstandes bereits nach einer sehr kurzen Förderstrecke erreicht sein, somit bevor die vertikale Kante des Gegenstandes zwischen die beiden Rollen eingeführt wird. Unter diesem Aspekt sollte auch vor dem Bereich der beiden Rollen eine Führung für die dem Kontaktbereich des Kontaktelementes diametrale vertikale Kante des Gegenstandes vorgesehen sein. Da sich der Gegenstand noch in der Drehbewegung befindet, braucht diese Führung nicht parallel zur Förderrichtung angeordnet sein, sondern kann sich konisch in Richtung der nachlaufenden drehbaren Rolle bezüglich der Förderrichtung erweitern. Bei großen Fördergeschwindigkeiten hingegen sollte der Ort der beiden Rollen so abgestimmt sein, daß die vertikale Kante zwischen die beiden Rollen eingeführt wird.

Die erfindungsgemäße Vorrichtung zur Durch führung des erfidungsgemäßen Verfarhrens ist im Patentanspruch 9 beschrieben. Bevorzugt weiterbirdungen der Vorrichtung ergeben sich aus den Patentansprüchen 10-21.

Die Erfindung schlägt damit ein Verfahren und eine Vorrichtung vor, die bei großer Fördergeschwindigkeit ein Drehen eines Gegenstandes auf engstem Raum gewährleistet. Dies erfolgt grundsätzlich mittels des Kontaktelementes. Unterstützt werden kann der Dreheffekt durch eine Einrichtung, die auf den Gegenstand einwirkt und einen Bremseffekt bewirkt. Zusätzlich kann das Gegenlager in Art der beiden Rollen vorgesehen sein, zwischen die die vorstehend definierte vertikale Kante des Gegenstandes eingeführt wird. All dies trägt dazu bei, daß der Gegenstand selbst bei besonders großen Fördergeschwindigkeiten auf engstem Raum gedreht werden kann. Es ist hierdurch möglich, eine Verpackungsmaschine zu bauen, die im Vergleich zu Konkurrenzprodukten eine sehr geringe Baulänge aufweist, mit der Folge geringer Baukosten.

Weitere Merkmale der Erfindung sind in den Unteransprüchen, der Beschreibung der Figuren und den Figuren selbst dargestellt, wobei bemerkt wird, daß alle Einzelmerkmale und alle Kombinationen von Einzelmerkmalen erfindungswesentlich sind.

In den Figuren ist die Erfindung anhand einer grundsätzlichen Ausführungsform beispielsweise dargestellt, ohne auf diese beschränkt zu sein. Es stellt dar:
- Figur 1: in einer räumlichen Ansicht einen Ausschnitt einer Verpackungsmaschine, die mit der Drehvorrichtung versehen ist,
- Figur 2: die in Figur 1 gezeigte Drehvorrichtung in einer Draufsicht,
- Figuren 3 bis 7: einzelne Verfahrensschritte eines ersten Drehvorganges einer Faltschachtel im Bereich der Drehvorrichtung, in einer räumlichen Ansicht, nämlich

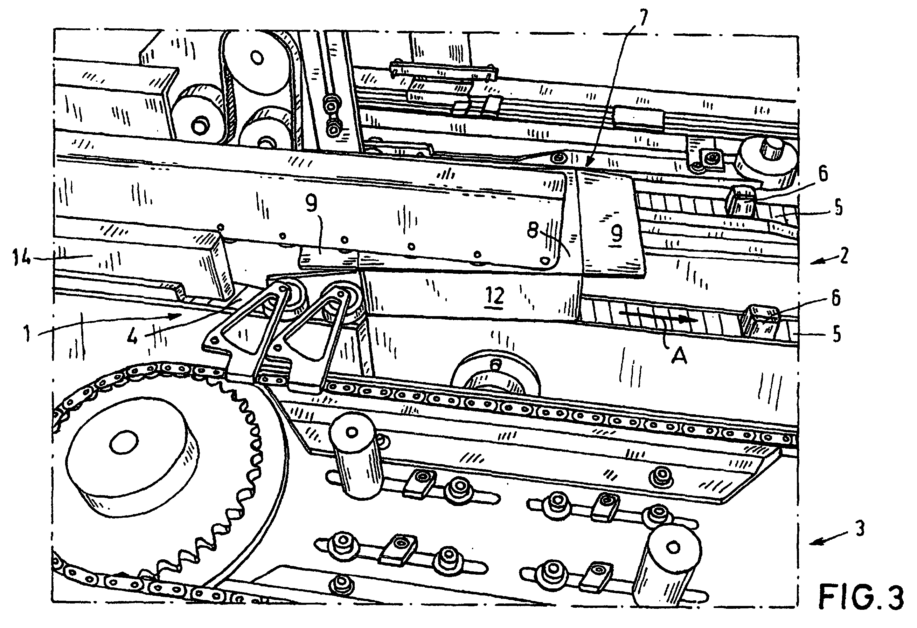

- Figur 3: aus der Richtung der Drehvorrichtung gesehen das anfängliche Fördern und Drehen der Faltschachtel mittels des Kontaktelementes,

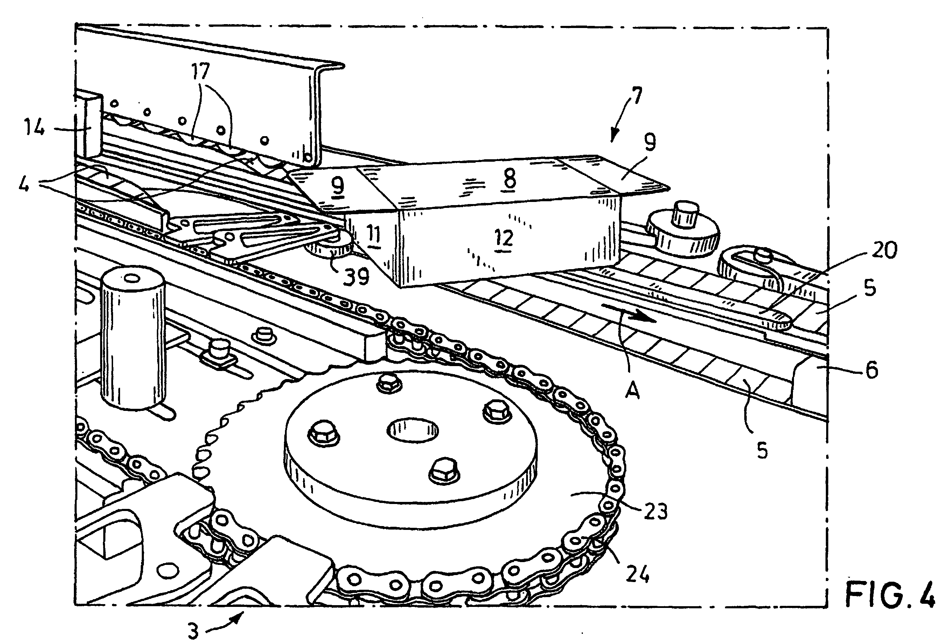

- Figur 4: aus der Richtung der Drehvorrichtung gesehen zu einem etwas späteren Zeitpunkt, die mittels des Kontaktelementes bereits weitgehend gedrehte Faltschachtel,

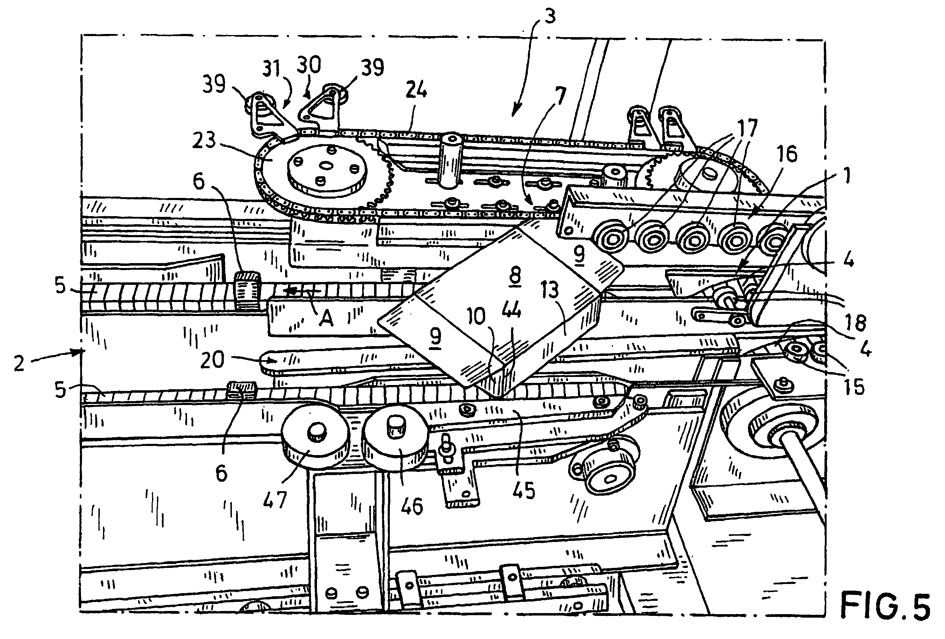

- Figur 5: die in Figur 4 gezeigte Situation, von der der Dreheinrichtung gegenüberliegenden Seite der Verpackungsmaschine aus betrachtet,

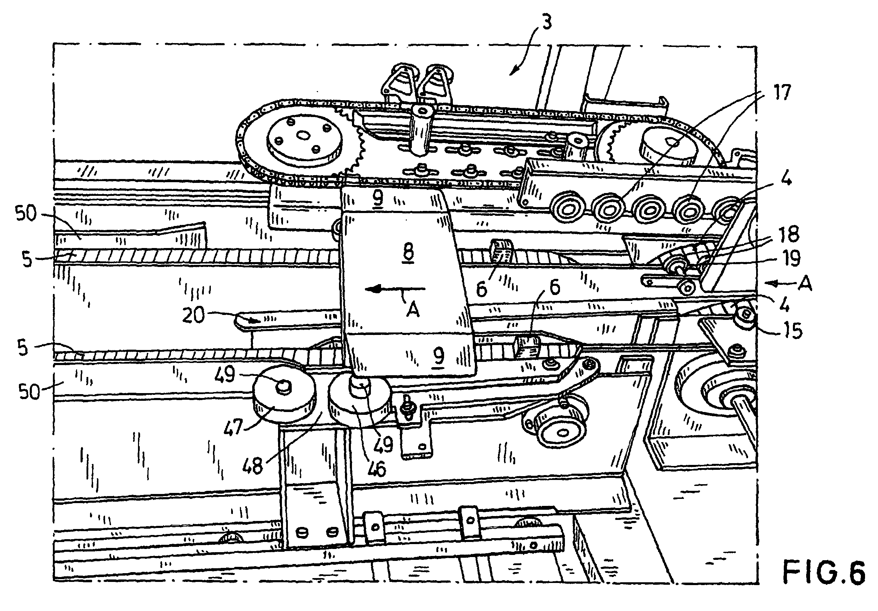

- Figur 6: in einer Blickrichtung gemäß Figur 5, die Faltschachtel nach erfolgter Drehung um 90°,

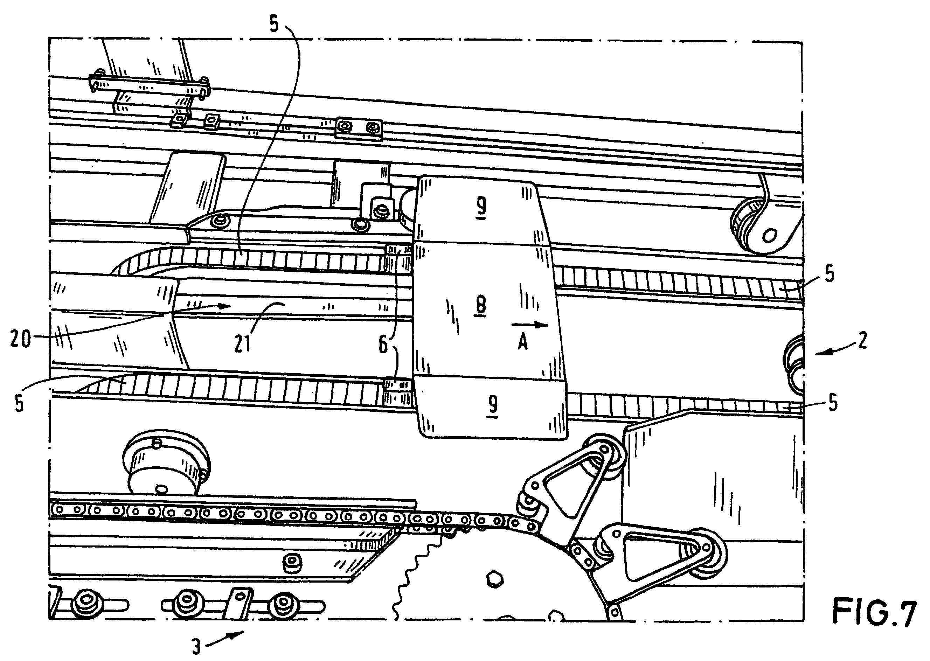

- Figur 7: aus der Blickrichtung der Drehvorrichtung das Abfördern der gedrehten Faltschachtel mittels zweier Mitnehmer, die Bestandteil einer Förderbahn bilden,

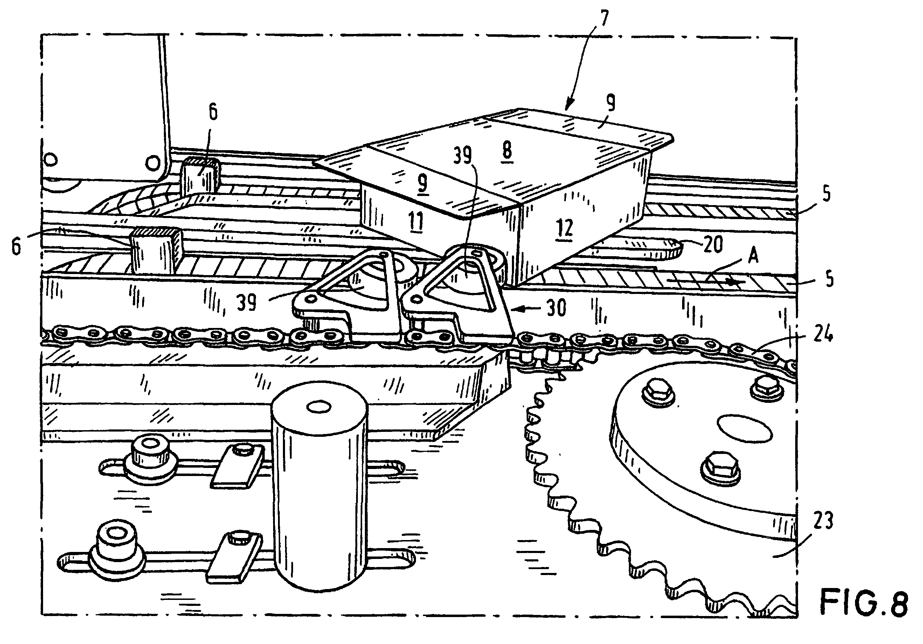

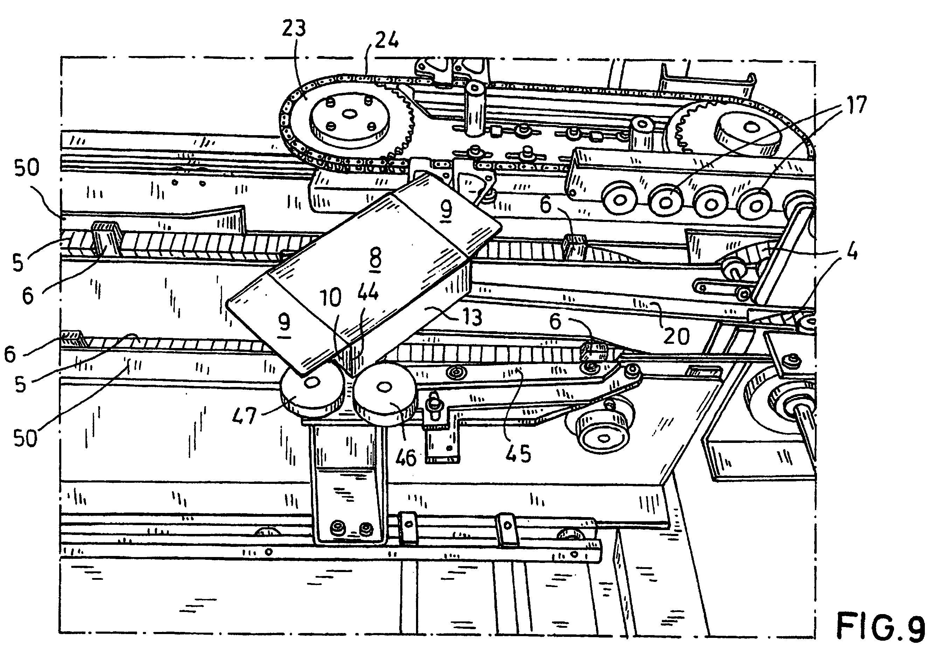

- Figuren 8 und 9: einen Verfahrensschritt eines abgewandelten Drehvorgangs, bei dem die der Drehvorrichtung abgewandte vertikale Kante der Faltschachtel in einen Raum zwischen Führungsrollen eintaucht, veranschaulicht in Figur 8 von der Drehvorrichtung aus gesehen und in Figur 9 von der der Drehvorrichtung gegenüberliegenden Seite betrachtet.

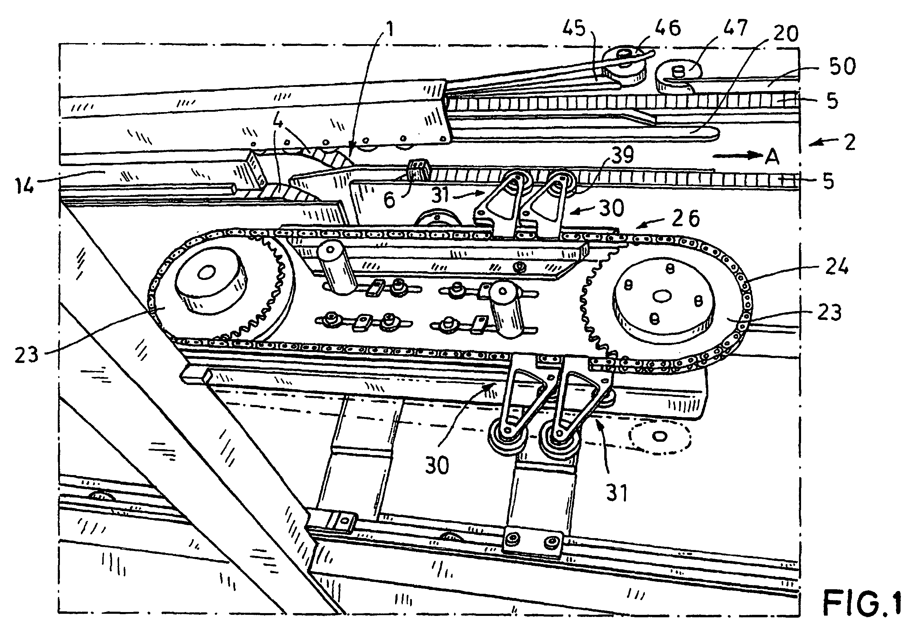

Die Figuren 1, 3 bis 7 zeigen eine erste schmale Bahn 1 zum Fördern einer quaderförmigen, längs ausgerichteten Faltschachtel 7 in Förderrichtung A sowie eine zweite breite Bahn 2 zum Fördern der um 90° gedrehten, somit quer ausgerichteten Faltschachtel in dieser Förderrichtung A. Neben den beiden Bahnen 1 und 2 ist die Drehvorrichtung 3 angeordnet, wobei diese nur geringfügig den Förderabschnitt der ersten Bahn 1 überdeckt, somit insbesondere im Bereich der zweiten Bahn 2 angeordnet ist. Die erste Bahn 1 ist seitlich zur zweiten Bahn 2 versetzt und näher zur Drehvorrichtung 3 angeordnet. Jede Bahn 1 bzw. 2 weist zur Aufnahme der Faltschachteln 7 zwei Kunststoffketten 4 bzw. 5 auf und es liegt das jeweilige Obertrum der Ketten auf einer nicht näher bezifferten Unterlage auf. Die jeweilige Kette 5 ist mit mehreren Paaren von Mitnehmern 6 versehen, wobei die Mitnehmer 6 des jeweiligen Paares, senkrecht zur Förderrichtung der Bahn 1 bzw. 2 miteinander fluchten. Im Bereich der ersten Bahn 1 wird die Faltschachtel zwischen den beiden Kunststoffketten 4 dieser Bahn sowie einem oberhalb der Ketten 4 angeordneten Oberläufer transportiert. Die Kunststoffketten 4 sind somit nicht mit Mitnehmern 6 versehen. Die Mittel zum Antreiben der Kunststoffketten 4 und 5 sind in den Figuren nicht näher beziffert.

Die jeweilige Faltschachtel 7 wird, bezogen auf die Förderrichtung A, in den Bereich des vorlaufenden Endes der ersten Bahn 1 gefördert. Hierbei weist die Faltschachtel 7 die insbesondere in der Figur 3 gezeigte Gestalt auf. Sie ist so weit vorgefaltet, dass die an den Deckelabschnitt 8 angrenzenden stirnseitigen Laschenabschnitte 9 nach dem Drehen der Faltschachtel 7 nur noch nach unten abzuwinkeln und mit dem vorderen Seitenabschnitt 10 sowie dem hinteren Seitenabschnitt 11 der Verpackung zu verbinden, insbesondere zu verkleben sind. Bezogen auf die Position der Faltschachtel 7 gemäß Figur 3 ist der der Drehvorrichtung 3 zugewandte lange Seitenabschnitt mit der Bezugsziffer 12, der andere, abgewandte lange Seitenabschnitt mit der Bezugsziffer 13 bezeichnet. Nicht einsehbar ist in den Figuren der die Seitenabschnitte 10 bis 13 verbindende Bodenabschnitt der Faltschachtel 7.

Wie einzelnen der Figuren zu entnehmen sind, wird die Faltschachtel 7 im Bereich der ersten Bahn 1 auf der der Drehvorrichtung 3 zugewandten Seite, somit im Bereich des Seitenabschnittes 12 durch eine Führungsschiene 14 geführt. Der gegenüberliegende Seitenabschnitt 13 hingegen wird im Bereich der ersten Bahn 1 mittels einer Rollenreihe geführt, die aus einzelnen, in Förderrichtung A dicht hintereinander angeordneten und um vertikale Achsen frei drehbaren Rollen 15 besteht. Oberhalb der Förderebene von erster und zweiter Bahn 1, 2 ist im Bereich des vorderen Endes der ersten Bahn 1 bis geringfügig in den nachlaufenden Bereich der zweiten Bahn 2 reichend, eine Rollenbahn 16 angeordnet, deren einzelne Rollen um horizontale Achsen frei drehbar gelagert sind. Die Rollenbahn 16 ist parallel zur Förderebene der Bahnen 1, 2 positioniert und in ihrer Höhe verstellbar, wobei diese so zu wählen ist, dass die Rollen 17 beim Durchlauf der Faltschachtel 7 den Deckelabschnitt 8 und die Laschenabschnitte 9 in der horizontalen Position halten.

Parallel zur Rollenbahn 16 sind, gleichfalls höhenverstellbar, zwei Rollen 18 vorgesehen, die beim Transport der Faltschachtel 7 im vorderen Endbereich der Bahn 1 benachbart zum Seitenabschnitt 13 der Faltschachtel 7 auf derem Deckelabschnitt 8 ablaufen. Der Darstellung der Figuren 5 und 6 ist zu entnehmen, dass die Rollen 18 mittels Federn 19 reibbeaufschlagt sind, so dass sie sich zwar drehen können, jedoch nur unter Einleitung eines gewissen Drehmomentes. Die Konsequenz ist, dass, beim Passieren der Rollen 18, im Kontaktbereich der Rollen 18 und des Deckelabschnittes 8 eine Bremskraft in die Faltschachtel 7 eingeleitet wird, die entgegen der Förderrichtung A wirkt. Im vorlaufenden Endbereich der ersten Bahn 1 und dem nachlaufenden Endbereich der zweiten Bahn 2, somit in dem Bereich, in dem die Drehvorrichtung 3 wirksam ist, ist zwischen den Ketten 4 bzw. den Ketten 5 eine Tragschiene 20 angeordnet, die im Bereich ihres der ersten Bahn 1 zugewandten Endes um eine vertikale Achse schwenkbar gelagert ist. Die Tragschiene 20 weist eine obere Aufnahmefläche 21 auf, die sich auf einem geringfügig höheren Niveau befindet als das Aufnahmeniveau der Kunststoffketten 5 der zweiten Bahn 2, so dass, geringfügige Kippvorgänge der Faltschachtel 7 berücksichtigt, die Faltschachtel 7 mit Inhalt nur mit relativ geringem Gewicht auf der zweiten Bahn 2 aufliegt und infolge dieser Entlastung der Drehvorgang bevorzugt durch weitgehende Gewichtsauflage auf der glatten Tragschiene 20 erfolgen kann. Die zweite Bahn 2 ist, zwecks Umrüstung auf verschiedene Verpackungsformate, in ihrer Förderbreite verstellbar, so dass infolge der schwenkbaren Lagerung der Tragschiene 20 deren zwischen die Kunststoffketten 5 ragender Abschnitt entsprechend dem Breitenmaß der Bahn 1 verstellt werden kann. Die Tragschiene 20 liegt in diesem Bereich auf einer Unterlage auf.

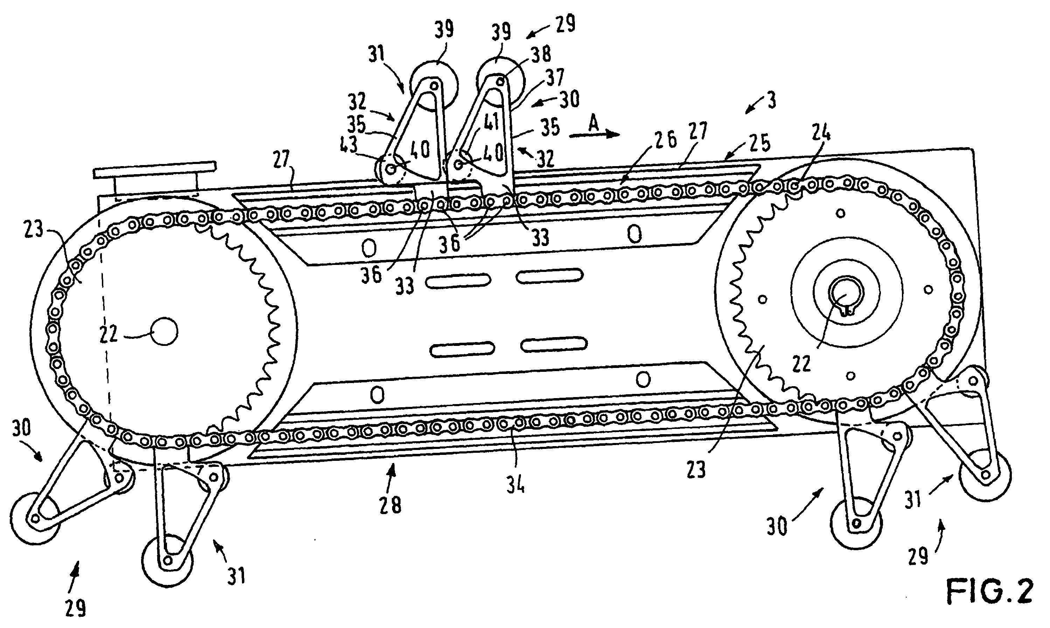

Nachfolgend wird die Drehvorrichtung 3 und deren Wirkungsweise im Detail beschrieben, wobei nunmehr auch auf die Darstellung er Figur 2 Bezug genommen wird:

Die Drehvorrichtung 3 weist zwei in vertikalen Achsen 22 gelagerte Kettenräder 23 auf, wobei die im Bereich der zweiten Bahn 2 angeordnete Achse 22 angetrieben wird. Die Antriebsmittel sind nicht näher veranschaulicht und beinhalten einen regelbaren Elektromotor sowie ein Untersetzungsgetriebe. Die Kettenräder 23 umspannt eine Metallkette 24. Auf der den Bahnen 1 und 2 zugewandten Seite der Drehvorrichtung 3 ist parallel zu den Bahnen 1 und 2 eine Führungsschiene 25 zwischen den Kettenrädern 23 im Bereich des geraden Kettenabschnittes 26 angeordnet. Diese weist auf der dem Kettenabschnitt 26 abgewandten und der Bahn 2 zugewandten Seite eine vertikale Führungsfläche 27 auf. Das Gestell, das die Achsen 22, die Antriebsaggregate für die eine Achse 22 sowie die Führungsschiene 25 trägt, ist mit der Bezugsziffer 28 bezeichnet. Die Umlaufrichtung der Kette ist, bezogen auf den Kettenabschnitt 26, durch den Pfeil A verdeutlicht. Die Kette 24 nimmt, nach außen gerichtet, drei Elementenpaare 29 auf, die um jeweils dieselbe Kettenlänge voneinander beabstandet sind. Jedes Elementenpaar weist zwei identisch gestaltete, an der Kette 24 befestigte Elemente auf, die als vorlaufendes Kontaktelement 30 und nachlaufendes Stützelement 31 bezeichnet sind. Jedes Element 30 weist einen plattenförmigen Grundkörper 32 auf, der durch einen rechteckigen Abschnitt 33 sowie einen in Art eines rechtwinkligen Dreiecks gestalteten Abschnitt 35 gebildet ist. Der Grundkörper 32 ist mit seinem Abschnitt 33, dessen Länge in etwa der eines Kettengliedes 34 der Kette 24 entspricht, auf die Kette aufgelegt und in den beiden Kettenbolzen 36 des zugeordneten Kettengliedes 34 gelagert, so dass eine feste Verbindung von Kettenglied 34 und zugeordnetem Grundkörper 32 gebildet ist. Hierbei ist die vorlaufende Kante 37 des Grundkörpers 32, bezogen auf den geraden Kettenabschnitt 26, senkrecht zur Laufrichtung der Kette 24 orientiert. Im Bereich des spitzen Winkels des Abschnittes 35 nimmt der Grundkörper 32 eine vertikale Achse 38 auf, die nach unten gerichtet ist. In dieser ist eine über die Außenkontur des spitzen Bereiches des Grundkörpers 32 hinausragende Zylinderrolle 39 frei drehbar gelagert. Die andere Ecke des dreieckförmigen Abschnittes 35 nimmt eine Achse 40 auf, die parallel zur Achse 38 verläuft und gleichfalls nach unten gerichtet ist. In dieser Achse 40 ist eine Zylinderrolle 41 frei drehbar gelagert. Die Rolle 41 ragt über die Außenkontur des Grundkörpers 32. Dieser ist in seinem der vorlaufenden Kante 37 abgewandten Bereich mit einer parallel zu dieser verlaufenden Abflachung 43 versehen. Die Elemente 30 und 31 jedes Elementpaares 29 sind so mit der Kette 24 verbunden, dass zwischen diesen ein Kettenglied 34 frei bleibt.

Wie der Darstellung der Figur 2 zu entnehmen ist, erfolgt aufgrund dieser Anordnung im Bereich der Umlenkung der Kette 24 eine Spreizung der Elemente 30, 31 des jeweiligen Elementpaares 29. Verlässt das Elementpaar 29 den Bereich der Kettenräder 23, wobei vorliegend nur das nachlaufende Kettenrad von Interesse ist, bedingt die Überführung der Kette in die gestreckte Position gemäß dem geraden Kettenabschnitt 26, dass sich einerseits das Kontaktelement 30 im Bereich der Abflachung 43 an der vorlaufenden Kante 37 des nachfolgenden Stützelementes 31 abstützt, andererseits die Rollen 41 der beiden Elemente 30 und 31 im Bereich der Führungsschiene 25 entlang deren Führungsfläche 27 ablaufen. Bei straff gespannter Kette 24 ist hierdurch eine exakte Positionierung von Kontaktelement 30 und Stützelement 31 im Bereich des geraden Kettenabschnittes 26 sichergestellt.

Insbesondere die Darstellung der Figuren 1 und 3 veranschaulicht, dass die Rolle 39 dann, wenn die Elemente 30 und 31 den geraden Kettenabschnitt 26 durchlaufen, in der Flucht derjenigen Kette 4 der ersten Bahn 1 angeordnet sind, die benachbart der Drehvorrichtung 3 ist. Die Rollen 39 weisen beispielsweise einen Durchmesser von 5 cm auf. Die Umlaufgeschwindigkeit der Kette 24 ist bezüglich der Fördergeschwindigkeit von erster und zweiter Bahn 1, 2 koordiniert, derart, dass immer dann, wenn eine Faltschachtel 7 mittels der ersten Bahn 1 in den Bereich der Drehvorrichtung 3 gefördert wird, das nächstfolgende Elementpaar 29 im Bereich des nachlaufenden Kettenrades 23 in den geraden Kettenabschnitt 26 eingeschwenkt wird. In der Konsequenz, und dies ist in der Figur 3 veranschaulicht, wird die Rolle 39 des Kontaktelementes 30 gegen den hinteren Seitenabschnitt 11 der Faltschachtel 7 bewegt und zwar in der Nähe des Seitenabschnittes 12 der Faltschachtel 7. Zu gleicher Zeit wirken auf den Deckelabschnitt 8 der Faltschachtel 7 benachbart des Seitenabschnittes 13 die die Bremswirkung ausübenden Rollen 18. Allein aufgrund der außermittigen Einwirkung der Rolle 39 des Kontaktelementes 30 auf die Faltschachtel 7 wird diese, von oben betrachtet, entgegen dem Uhrzeigersinn gedreht, wobei, wie es deutlich der Figur 4 zu entnehmen ist, die Rolle 39 des Kontaktelementes 30 mit fortschreitendem Drehen der Faltschachtel 7 auf dem hinteren Seitenabschnitt 11 benachbart zu dessen unterer Kante in Richtung des Seitenabschnittes 13 der Faltschachtel 7 abläuft. Figur 5 zeigt, dass die der Drehvorrichtung 3 abgewandte vertikale Kante von einem Seitenlineal 45 geführt wird, das sich, entsprechend dem Drehvorgang und der maximalen diagonalen Ausrichtung der Verpackung senkrecht zur Förderrichtung A konisch erweitert, um sicherzustellen, dass die Faltschachtel 7 nicht zwischen der Rolle 39 des Kontaktelementes 30 und dem Seitenlineal 45 eingeklemmt wird. Die Drehung der Faltschachtel 7 um 90°, somit deren Drehung in die gewünschte Endposition, wird begrenzt durch das dem Kontaktelement 30 nachlaufende Stützelement 31, dessen Rolle 39 dann gleichfalls am hinteren Seitenabschnitt 11 der Faltschachtel 7 anlegt. Die Dynamik beim Drehvorgang bewirkt, dass kurz vor Erreichen der vollständig gedrehten Stellung der Faltschachtel 7 diese langsamer in Förderrichtung A gefördert wird als das Elementpaar 29, so dass die Rolle 39 des Kontaktelementes 30 auf dem hinteren Seitenabschnitt 11 wieder in Richtung des Seitenabschnittes 12 der Faltschachtel 7 abrollt. Nach Abschluss der Drehung um 90° ist demnach ausreichend Platz auf dem hinteren Seitenabschnitt 11 für die Anlage der beiden Rollen 39 des Elementpaares 29. Diese Situation ist in Figur 6 veranschaulicht. Die Neigung der Tragschiene 20 ist so eingestellt, dass in der Position der Faltschachtel gemäß der Darstellung in Figur 6 diese nur geringfügig getragen wird, womit Förderkräfte bereits in höherem Maß über die beiden Ketten 5 in die Faltschachtel 7 eingeleitet werden. Formschlüssig gefördert wird die Faltschachtel 7 erst dann, wenn die Mitnehmer 6 der Ketten 5 der zweiten Bahn 2 sich gegen den Seitenabschnitt 13 der Faltschachtel 7 legen, wie es in Figur 7 veranschaulicht ist.

Die Bilder gemäß der Figuren 3 bis 7 zeigen, dass die Drehung der Faltschachtel 7 um 90° bei einer sehr geringen Förderstrecke, bezogen auf die Förderrichtung A, bewerkstelligt werden kann. Werden die Bahnen 1 und 2, somit die Ketten 4 und 5, mit einer größeren Fördergeschwindigkeit A betrieben, bedingt dies zwangsläufig, dass auch die die Elementpaare 29 aufnehmende Kette 24 der Drehvorrichtung 3 mit einer größeren Geschwindigkeit betrieben werden muss. In der Konsequenz wird eine zwar immer noch geringe, aber dennoch etwas längere Förderstrecke zum Drehen der Faltschachtel 7 benötigt.

Die Verhältnisse bei hoher Fördergeschwindigkeit veranschaulichen für das Stadium während der Drehbewegung der Faltschachtel 7 die Figuren 8 und 9. Dort entspricht die Position der Faltschachtel 7 etwa der in den Figuren 4 und 5 gezeigten. - In den Figuren 8 und 9 ist gezeigt, daß die Faltschachtel 7 im Bereich ihrer vertikalen Kante 44 in den Raum zwischen zwei um vertikale Achsen frei drehbare Rollen 46 und 47 hineingedreht wird, wobei zwischen der vorlaufenden Rolle 47 und der nachlaufenden Rolle 46 ein Zwischenraum 48 verbleibt. Die Zylinderrollen 46 und 47 sind um vertikale Achsen 49 frei drehbar. Die Rollen 46 und 47 weisen etwa denselben Durchmesser auf, beispielsweise einen solchen von 7 cm und sind in einer Flucht angeordnet, die parallel zur Förderrichtung A verläuft. Der Abstand der Rolle 46 bzw. 47 in der Lotrechten zur Förderrichtung A betrachtet, von der jeweiligen Rolle 39 des auf die Faltschachtel 7 einwirkenden Elementpaares 29, entspricht ungefähr dem Abstand von vorderem und hinterem Seitenabschnitt 10, 11 der Faltschachtel 7. Die Kante 44 der Faltschachtel 7 wird zwischen die beiden Rollen 46 und 47 eingedreht, wobei die Rolle 46 den Seitenabschnitt 13 und die Rolle 47 den vorderen Seitenabschnitt 10 kontaktiert und geringfügig auf diesen ablaufen können. In der vollständig gedrehten Position der Faltschachtel 7 wird diese über die vorlaufende Rolle 47 ausgefördert, desgleichen aus dem Bereich des der Faltschachtel 7 zugeordneten Elementpaares 29 herausgefördert, wobei nunmehr seitliche Führungsschienen 50 die Führung der gedrehten Faltschachtel übernehmen.

## Patentansprüche

1. Verfahren zum Drehen eines Gegenstands (7), der eine Unterseite sowie Seitenflächen (10, 11, 12, 13) besitzt, insbesondere zum Drehen einer quaderförmigen Faltschachtel (7), wobei der Gegenstand (7) längs einer ersten Bahn (1) gefördert wird, gedreht wird, um eine Neuausrichtung des Gegenstands (7) zu erreichen, und längs einer zweiten Bahn (2) gefördert wird, die in Richtung (A) der ersten Bahn (1) verläuft, wobei die Drehung des Gegenstands (7) unter Einwirkung eines eine Seitenfläche (11) des Gegenstands (7) kontaktierenden Elements (30) erfolgt, sowie das Kontaktelement (30) in Richtung (A) der Bahnen (1, 2) bewegt wird, wobei es gegen die, auf die Förderrichtung des Gegenstands (7) bezogen, hintere Seitenfläche (11) des Gegenstands (7) bewegt wird und diese rollend kontaktiert,
**dadurch gekennzeichnet, daß** ein Stützelement (31) in Richtung der Bahnen (1, 2) bewegt wird, wobei das Stützelement (31), auf die Bewegungsrichtung (A) des Kontaktelements (30) bezogen, hinter diesem angeordnet ist und die hintere Seitenfläche (11) des Gegenstands (7) bei dessen Neuausrichtung rollend kontaktiert.

2. Verfahren nach Anspruch 1, **dadurch gekennzeichnet, daß** das Kontaktelement (30) zum Drehen des Gegenstands (7) benachbart einer in Richtung der Bahnen (1, 2) verlaufenden Seitenfläche (12) des Gegenstands (7) gegen dessen hintere Seitenfläche (11) bewegt wird.

3. Verfahren nach Anspruch 1 oder 2, **dadurch gekennzeichnet, daß** das Drehen des Gegenstands (7) eine Neuausrichtung des Gegenstands um etwa 90° gedreht ergibt.

4. Verfahren nach einem der Ansprüche 1 bis 3, **dadurch gekennzeichnet, daß** das Kontaktelement (30) und/oder das Stützelement (31) umlaufend gefördert werden.

5. Verfahren nach einem der Ansprüche 1 bis 4, **dadurch gekennzeichnet, daß** beim Drehen des Gegenstands (7) der dem Kontaktbereich von Kontaktelement (30) und Gegenstand (7) gegenüberliegende Bereich des Gegenstands (7) langsamer mit einer Bewegungskomponente in Richtung der Bahnen (1, 2) gefördert wird als der Kontaktbereich, indem die dem Kontaktbereich gegenüberliegende Seite (10) und/oder die Unterseite und/oder die Oberseite (8) durch Reibung beaufschlagt wird.

6. Verfahren nach einem der Ansprüche 1 bis 5, **dadurch gekennzeichnet, daß** beim Drehen des Gegenstands (7) die dem Kontaktbereich des Kontaktelements (30) diametrale vertikale Kante (44) des Gegenstands (7) zwischen zwei um vertikale Achsen (49) drehbare Rollen (46, 47) eingeführt wird, wobei die Rollen (46, 47) die beiden Seitenflächen (13, 10), die an diese vertikale Kante (44) angrenzen, kontaktieren.

7. Verfahren nach einem der Ansprüche 1 bis 6, **dadurch gekennzeichnet, daß** beim Drehen des Gegenstands (7) die den Kontaktbereich des Kontaktelements (30) diametrale vertikale Kante (44) geführt wird.

8. Verfahren nach einem der Ansprüche 1 bis 7, **dadurch gekennzeichnet, daß** nach dem Drehen des Gegenstands (7), bei Einwirkung des Kontaktelements (30), die dem Kontaktelement (30) abgewandte Seitenfläche (10) des Gegenstands (7) geführt wird.

9. Vorrichtung zur Durchführung des Verfahrens nach einem der Ansprüche 1 bis 9, wobei das Kontaktelement (30) in einer umlaufenden Fördereinrichtung (23, 24) gelagert ist, die eine parallel zur Förderrichtung (A) der ersten Bahn (1) verlaufende Förderstrecke (26) aufweist, wobei das Kontaktelement (30) eine frei drehbare Rolle (39) besitzt,
**dadurch gekennzeichnet, daß** mit der Fördereinrichtung (23, 24) das Stützelement (31) verbunden ist, das nachlaufend zum Kontaktelement (30) angeordnet ist, wobei das Stützelement (31) eine frei drehbare Rolle (39) aufweist.

10. Vorrichtung nach Anspruch 9, **dadurch gekennzeichnet, daß** beim Durchlaufen der Förderstrecke (26) die der zweiten Bahn (2) zugewandte Kontur der Rollen (39) von Kontaktelement (30) und Stützelement (31) eine Linie bildet, die parallel zur Richtung dieser Bahn (2) verläuft.

11. Vorrichtung nach Anspruch 9 oder 10, **dadurch gekennzeichnet, daß** die umlaufende Fördereinrichtung (23, 24) eine Kette (24), einen Riemen oder dergleichen aufweist.

12. Vorrichtung nach einem der Ansprüche 9 bis 11, **dadurch gekennzeichnet, daß** mehrere Paare (29) von Kontakt- und Stützelement (30, 31) mit der Fördereinrichtung (23, 24) verbunden sind.

13. Vorrichtung nach einem der Ansprüche 9 bis 12, **dadurch gekennzeichnet, daß** beim Fördern entlang der Förderstrecke (26) Mittel (25) zum Führen des Kontakt- (30) und/oder Stützelementes (31) vorgesehen sind.

14. Vorrichtung nach Anspruch 13, **dadurch gekennzeichnet, daß** parallel zur Förderrichtung (A) der ersten Bahn (1) eine Führungsschiene (25) vorgesehen ist, an der sich Führungsrollen (41) von Kontakt- (30) und/oder Stützelement (31) abstützen.

15. Vorrichtung nach einem der Ansprüche 9 bis 14, **dadurch gekennzeichnet, daß** sich das jeweilige Paar (29) von Kontakt- (30) und Stützelement (31) beim Bewegen entlang der Förderstrecke (26) aneinander abstützt.

16. Vorrichtung nach einem der Ansprüche 9 bis 15, **dadurch gekennzeichnet, daß** die zweite Bahn (2) seitlich zur ersten Bahn (1), von der umlaufenden Fördereinrichtung (23, 24) weg, versetzt angeordnet ist, wobei im Bereich der Fördereinrichtung (23, 24) eine in Versetzrichtung verstellbare, insbesondere um eine vertikale Achse schwenkbare Tragschiene (20) zwischen den Führungsbahnen (5) der zweiten Bahn (2) angeordnet ist, wobei das Tragniveau der Tragschiene (20) zumindest im Eingangsbereich der zweiten Bahn (2) geringfügig höher ist als das Tragniveau der zweiten Bahn (2).

17. Vorrichtung nach einem der Ansprüche 9 bis 16, **dadurch gekennzeichnet, daß** im Eingangsbereich der umlaufenden Fördervorrichtung (23, 24) oberhalb des Tragniveaus der beiden Bahnen (1, 2) ein Andrückelement (18) vorgesehen ist, das in Kontakt mit der Deckelfläche (8) des Gegenstands (7) bringbar ist, wobei das Andrückelement (18) insbesondere als reibungsbehaftet drehbare Rolle ausgebildet ist.

18. Vorrichtung nach einem der Ansprüche 9 bis 17, **dadurch gekennzeichnet, daß** die erste (1) und/oder die zweite Bahn (2) in der Bahnbreite verstellbar ist.

19. Vorrichtung nach einem der Ansprüche 9 bis 18, **dadurch gekennzeichnet, daß** die zweite Bahn (2) auf ihrer der Fördereinrichtung (23, 24) abgewandten Seite eine im wesentlichen parallel zur Förderstrecke (26) angeordnete Führung (45, 50), die insbesondere in Art einer Führungsschiene ausgebildet ist, aufweist.

20. Vorrichtung nach einem der Ansprüche 9 bis 19, **dadurch gekennzeichnet, daß** die zweite Bahn (2) auf ihrer der Fördereinrichtung (23, 24) abgewandten Seite zwei um vertikale Achsen (49) frei drehbare Rollen (46, 47) aufweist, die in geringem Abstand zueinander angeordnet ist.

21. Vorrichtung nach Anspruch 20, **dadurch gekennzeichnet, daß** die Führung (45, 50) unterbrochen ist und im unterbrochenen Bereich die beiden Rollen (46, 47) aufnimmt, wobei die Rollen (46, 47) mit ihrer der Fördereinrichtung (23, 24) zugewandten Kontur im wesentlichen mit der Führungsfläche der Führung (45, 50) fluchten.

## Claims

1. Method for rotating an object (7) having an underside and side surfaces (10, 11, 12, 13), particularly for rotating a cuboid folding box (7), whereby the object (7) is conveyed along a first path (1), is rotated in order to achieve a new orientation of the object (7) and is conveyed along a second path (2), which runs in the direction (A) of the first path (1), whereby the rotation of the object (7) takes place under the influence of an element (30) contacting a side surface (11) of the object (7), and the contact element (30) is moved in the direction (A) of the paths (1, 2), such that it is moved against what is, relative to the transport direction of the object (7), the rear side surface (11) of the object (7) and makes rolling contact with this, **characterised in that** a support element (31) is moved in the direction of the paths (1, 2), whereby the support element (31) is arranged behind this relative to the movement direction (A) of the contact element (30) and makes rolling contact with the rear side surface (11) of the object (7) in its new orientation.

2. Method according to Claim 1, **characterised in that** the contact element (30) for rotating the object (7) is moved adjacent to a side surface (12) of the object (7) extending in the direction of the paths (1, 2), against its rear side surface (11).

3. Method according to Claim 1 or 2, **characterised in that** the rotation of the object (7) produces a new orientation of the object rotated by about 90°.

4. Method according to one of the claims 1 to 3, **characterised in that** the contact element (30) and/or the support element (31) are conveyed in circulating manner.

5. Method according to one of the claims 1 to 4, **characterised in that** on rotation of the object (7), the region of the object (7) opposing the contact region of the contact element (30) and the object (7) is conveyed more slowly with a movement component in the direction of the paths (1, 2) than the contact region, **in that** the side (10) opposing the contact region and/or the underside and/or the upper side (8) is acted upon by friction.

6. Method according to one of the claims 1 to 5, **characterised in that** on rotation of the object (7), the vertical edge (44) of the object (7) diagonally opposed to the contact region of the contact element (30) is introduced between two rollers (46, 47) rotatable about vertical axes (49), whereby the rollers (46, 47) make contact with the two side surfaces (13, 10) adjoining this vertical edge (44).

7. Method according to one of the claims 1 to 6, **characterised in that** on rotation of the object (7), the vertical edge (44) diagonally opposed to the contact region of the contact element (30) is guided.

8. Method according to one of the claims 1 to 7, **characterised in that** after rotation of the object (7), during engagement of the contact element (30), the side surface (10) of the object (7) facing away from the contact element (30) is guided.

9. Device for implementing the method according to one of the claims 1 to 9, whereby the contact element (30) is mounted in a circulating conveyor apparatus (23, 24) having a conveyor track (26) running parallel to the conveying direction (A) of the first path (1), whereby the contact element (30) has a freely rotatable roller (39), **characterised in that** connected to the conveyor apparatus (23, 24) is the support element (31) that is arranged following the contact element (30), whereby the support element (31) has a freely rotatable roller (39).

10. Device according to Claim 9, **characterised in that** on passing along the conveyor track (26), the outline of the rollers (39) of the contact element (30) and the support element (31) facing towards the second path (2) forms a line running parallel to the direction of this path (2).

11. Device according to Claim 9 or 10, **characterised in that** the circulating conveyor apparatus (23, 24) has a chain (24), a belt or the like.

12. Device according to one of the claims 9 to 11, **characterised in that** a plurality of pairs (29) of contact and support elements (30, 31) are connected to the conveyor apparatus (23, 24).

13. Device according to one of the claims 9 to 12, **characterised in that** on conveying along the conveyor track (26), means (25) for guiding the contact element (30) and/or the support element (31) are provided.

14. Device according to Claim 13, **characterised in that** parallel to the conveying direction (A) of the first path (1), a guide rail (25) is provided, on which guide rollers (41) of the contact element (30) and/or the support element (31) rest.

15. Device according to one of the claims 9 to 14, **characterised in that** the respective pair (29) of contact element (30) and support element (31) support each other on moving along the conveyor track (26).

16. Device according to one of the claims 9 to 15, **characterised in that** the second path (2) is arranged offset laterally from the first path (1) away from the circulating conveyor apparatus (23, 24), whereby arranged in the region of the conveyor apparatus (23, 24), between the guideways (5) of the second path (2), is a support rail (20) adjustable in an adjustment direction, particularly rotatable about a vertical axis, whereby the support level of the support rail (20), at least in the entrance region of the second path (2), is slightly higher than the support level of the second path (2).

17. Device according to one of the claims 9 to 16, **characterised in that** in the entrance region of the circulating conveyor apparatus (23, 24) above the support level of the two paths (1, 2), a pressure element (18) is provided, which may be brought into contact with the lid surface (8) of the object (7), whereby the pressure element (18) is particularly designed as a friction-fixed rotatable roller.

18. Device according to one of the claims 9 to 17, **characterised in that** the first (1) and/or second path (2) is adjustable in the path width.

19. Device according to one of the claims 9 to 18, **characterised in that** the second path (2) has on its side facing away from the conveyor apparatus (23, 24) a guideway (45, 50) arranged substantially parallel to the conveyor track (26), which is particularly designed in the style of a guide rail.

20. Device according to one of the claims 9 to 19, **characterised in that** the second path (2) has on its side facing away from the conveyor apparatus (23, 24) two rollers (46, 47) freely rotatable about vertical axes (49), arranged at a slight separation from each other.

21. Device according to Claim 20, **characterised in that** the guideway (45, 50) is interrupted and accepts the two rollers (46, 47) in the interrupted region, whereby the outline of the rollers (46, 47) facing towards the conveyor apparatus (23, 24) is substantially aligned with the guide surface of the guideway (45, 50).

## Revendications

1. Procédé pour tourner un objet (7) ayant une face inférieure et des faces latérales (10, 11, 12, 13), notamment pour tourner une boîte pliante parallélépipédique (7), l'objet (7) étant transféré le long d'un premier trajet (1), pour être tourné et être orienté alors une nouvelle direction, pour être transporté le long d'un second chemin (2) et dirigé dans la direction (A) du premier chemin (1), la rotation de l'objet (7) se faisant sous l'action d'un élément (30) venant en contact avec une surface latérale (11) de l'objet (7),
et l'élément de contact (30) étant déplacé dans la direction A du chemin (1, 2) contre la surface latérale arrière (11) de l'objet (7), par rapport à la direction de transport de l'objet (7), en venant en contact de roulement sur cette surface,
caractérisé à ce qu'
on déplace l'élément d'appui (31) dans la direction des chemins (1, 2), l'élément d'appui (31) est prévu derrière l'élément de contact (30) par rapport à la direction de mouvement (A) de cet élément de contact, et la surface latérale arrière (11) de l'objet (7) est en contact de roulement dans cette nouvelle direction.

2. Procédé selon la revendication 1,
**caractérisé en ce que**
l'élément de contact (30) pour faire tourner l'objet (7), est déplacé contre la surface latérale arrière (11) de l'objet au voisinage d'une surface latérale (12) de l'objet (7) dirigée dans la direction des chemins (1, 2).

3. Procédé pour tourner un objet (7) ayant une face inférieure et des faces latérales (10, 11, 12, 13) selon les revendications 1 ou 2,
**caractérisé en ce que**
la rotation de l'objet (7) dans sa nouvelle direction correspond à une rotation d'environ 90°.

4. Procédé selon l'une des revendications 1 à 3,
**caractérisé en ce que**
l'élément de contact (30) et/ou l'élément d'appui (31) sont transférés en continu.

5. Procédé selon l'une des revendications 1 à 4,
caractérisé à ce qu'
en tournant l'objet (7) la zone de l'objet (7) située en regard de la zone de contact de l'élément de contact (30) et de l'objet (7), est transférée plus lentement avec une composante de mouvement dans la direction des chemins (1, 2) que la zone de contact, en soumettant à du frottement le côté (10) en regard de la zone de contact et/ou la face inférieure et/ou la face supérieure (8).

6. Procédé selon l'une des revendications 1 à 5,
**caractérisé en ce que**
lors de la rotation de l'objet (7), l'arrête verticale (44) de l'objet (7), diamétralement opposée la zone de contact de l'élément de contact (30) est introduite entre deux galets (46, 47) tournant autour d'axes verticaux (49),
les galets (46, 47) touchant les deux surfaces latérales (13, 10) adjacentes à cette arrête verticale (44).

7. Procédé selon l'une des revendications 1 à 6,
**caractérisé en ce qu'**
en tournant l'objet (7), l'arrête verticale (44), diamétralement opposée à la zone de contact de l'élément de contact (30) est guidée.

8. Procédé selon l'une des revendications 1 à 7,
**caractérisé en ce qu'**
après avoir tourné l'objet (7), par l'action de l'élément de contact (30), on guide la surface latérale (10) de l'objet (7) allant tourner vers l'élément de contact (30).

9. Dispositif pour la mise en oeuvre du procédé selon l'une des revendications 1 à 9 dans lequel l'élément de contact (30) est monté dans une installation de transfert (23, 24) continu, ayant un chemin de transfert (26) parallèle à la direction de transfert (A) du premier chemin (1), l'élément de contact (30) ayant trois galets (39) tournant librement,
**caractérisé en ce que**
l'élément d'appui (31) est relié à la station de transfert (23, 24), cet élément étant en aval de l'élément de contact (30) et,
l'élément d'appui (31) comporte un galet (39) tournant librement.

10. Dispositif selon la revendication 9,
**caractérisé en ce qu'**
au passage du chemin de transfert (26), le contour des galets (39) tourné vers le second chemin (2) forme une ligne à partir de l'élément de contact (30) et de l'élément d'appui (31), parallèle à la direction de ce chemin (2).

11. Dispositif selon l'une des revendications 9 ou 10,
**caractérisé en ce que**
l'installation de transfert continu (23, 24) comporte une chaîne (24), une courroie ou un moyen analogue.

12. Dispositif selon l'une des revendications 9 à 11,
**caractérisé par**
plusieurs paires (29) d'élément de contact et d'appui (30, 31) reliées à l'installation de transfert (23, 24).

13. Dispositif selon l'une des revendications 9 à 12,
**caractérisé par**
des moyens (25) pour guider les éléments de contact (30) et/ou d'appui (31) lors du transfert le long du chemin de transfert (26).

14. Dispositif selon la revendication 13,
**caractérisé en ce qu'**
en parallèle à la direction de transfert (A) du premier chemin (1), il est prévu un rail de guidage (25) sur lequel s'appuient les galets de guidage (41) des éléments de contact (30) et/ou d'appuis (31).

15. Dispositif selon les revendications 9 à 14,
**caractérisé en ce que**
la paire (29) respective d'éléments de contact (30) et d'appui (31) s'appuie réciproquement lors du mouvement le long du chemin de transfert (26).

16. Dispositif selon l'une des revendications 9 à 15,
**caractérisé en ce que**
le second chemin (2) est décalé latéralement par rapport au premier chemin (1) en s'écartant de l'installation de transfert continu (23, 24),
et dans la zone de l'installation de transfert (23, 24), un rail de support (20) réglable dans la direction de décalage, notamment pivotant autour d'un axe vertical, est prévu entre les chemins de guidage (5) du second chemin (2),
le niveau de support du rail de support (20) étant légèrement plus haut que le niveau de support du second chemin (2), au moins dans la zone d'entrée du second chemin (2).

17. Dispositif selon l'une des revendications 9 à 16,
caractérisé ou ce qu'
un élément d'appui (18) prévu dans la zone d'entrée du dispositif de transfert continu (23, 24) au-dessus du niveau de support des deux chemins (1, 2), peut être mis en contact avec la surface supérieure (8) de l'objet (7), l'élément d'appui (18) étant notamment réalisé sous la forme d'un galet tournant avec friction.

18. Dispositif selon l'une des revendications 9 à 17,
**caractérisé en ce que**
le premier chemin (1) et/ou le second chemin (2) sont de largeur réglable.

19. Dispositif selon l'une des revendications 9 à 18,
**caractérisé en ce que**
le second chemin (2) présente sur son côté opposé à l'installation de transfert (23, 24), un moyen de guidage (45, 50) prévu essentiellement parallèlement au chemin de transfert (26), et notamment réalisé sous la forme d'un rail de guidage.

20. Dispositif selon l'une des revendications 9 à 19,
**caractérisé en ce que**
le second chemin (2) présente sur son côté opposé à l'installation de transfert (23, 24), deux galets (46, 47) tournant librement autour d'axes verticaux (49), ces galets étant à faible distance l'un de l'autre.

21. Dispositif selon la revendication 20,
**caractérisé en ce que**
le moyen de guidage (45, 50) est interrompu et reçoit les deux galets (46, 47) dans la zone interrompue,
les galets (46, 47) étant principalement alignés avec la surface de guidage du moyen de guidage (45, 50) par leur contour tourné vers l'installation de transfert (23, 24).
